# EUROPEAN PATENT APPLICATION

(11) **EP 4 708 266 A1**
(43) Date of publication of application: **11.03.2026**
(21) Application number: 25192278.7
(22) Date of filing: 28.07.2025
(51) Int. Cl.: G09F 9/302

(54) **ANGLE ADJUSTMENT LOCK AND DISPLAY DEVICE HAVING ANGLE ADJUSTMENT LOCK**

(30) Priority: 09.09.2024 CN 202411256994
(71) Applicant: Shenzhen Leyard Opto-Electronic Co., Ltd., Shenzhen Guangdong 518110 (CN)
(72) Inventor: ZHENG, Jinlong, Shenzhen, 518110 (CN); LI, Dong, Shenzhen, 518110 (CN); HUANG, Xuexiang, Shenzhen, 518110 (CN)
(74) Representative: HGF

(57) **Abstract**

The present invention provides an angle adjustment lock and a display device including the angle adjustment lock. The angle adjustment lock includes: a lock body, the lock body being provided with a first guide portion; a first lock base, the first lock base being provided with a first mounting surface; a second lock base, provided on the lock body, and the second lock base being provided with a second mounting surface; and an adjustment assembly, including an operating member and a first transmission member, wherein the operating member is movably arranged on the lock body, and the first guide portion is guidingly cooperated with the first transmission member. By the technical solution provided in the present invention, the problem in the related art that an angle adjustment lock cannot allow for easy adjustment of an included angle between adjacent display units can be solved.

## Description

The application claims the priority to Patent Application No. 202411256994.3, filed to the China National Intellectual Property Administration on September 9, 2024 and entitled "Angle Adjustment Lock and Display Device Having Angle Adjustment Lock".

### Technical Field

The present invention relates to the technical field of display devices, and in particular, to an angle adjustment lock and a display device having the angle adjustment lock.

### Background

A display screen is tiled by a plurality of display units, and adjacent display units are connected by a quick connection lock.

In the related art, an angle adjustment lock can not only connect adjacent display units, but also adjust an included angle between the adjacent display units.

However, the angle adjustment lock in the related art cannot allow for easy adjustment of the included angle between adjacent display units.

### Summary

The present invention provides an angle adjustment lock and a display device having the angle adjustment lock, so as to solve the problem in the related art that an angle adjustment lock cannot allow for easy adjustment of an included angle between adjacent display units.

According to one aspect of the present invention, provided is an angle adjustment lock, the angle adjustment lock including: a lock body, the lock body being provided with a first guide portion; a first lock base, the first lock base being provided with a first mounting surface; a second lock base, the second lock base being provided with a second mounting surface; and an adjustment assembly, including an operating member and a first transmission member, wherein the operating member is movably arranged on the lock body, and the first guide portion is guidingly cooperated with the first transmission member, and when the operating member moves, the operating member drives the first lock base to move along a preset arc direction through the first transmission member, so as to adjust an angle between the first mounting surface and the second mounting surface.

Further, the lock body is further provided with a second guide portion, the adjustment assembly further includes a second transmission member, and the second guide portion is guidingly cooperated with the second transmission member; and when the operating member moves, the operating member drives the second lock base to move along the preset arc direction through the second transmission member, such that the first lock base and the second lock base get close to each other or get away from each other along the preset arc direction, so as to adjust the angle between the first mounting surface and the second mounting surface.

Further, the first transmission member includes a first sliding rod and a first transmission rod, wherein the first sliding rod is connected with the first lock base, a first end of the first transmission rod is sleeved on the first sliding rod, a second end of the first transmission rod is rotatably connected with the operating member, and the first guide portion is guidingly cooperated with the first sliding rod; and/ or the first guide portion is guidingly cooperated with the first transmission rod, such that the first sliding rod is slidably arranged on the lock body along the preset arc direction; and the second transmission member includes a second sliding rod and a second transmission rod, wherein the second sliding rod is connected with the second lock base, a first end of the second transmission rod is sleeved on the second sliding rod, a second end of the second transmission rod is rotatably connected with the operating member, and the second guide portion is guidingly cooperated with the second sliding rod, and/ or the second guide portion is guidingly cooperated with the second transmission rod, such that the second sliding rod is slidably arranged on the lock body along the preset arc direction; wherein when the operating member moves, the operating member drives the first sliding rod to move along the preset arc direction through the first transmission rod, and the operating member drives the second sliding rod to move along the preset arc direction through the second transmission rod.

Further, the first guide portion includes an arc-shaped slot provided on the lock body, wherein the arc-shaped slot extends along the preset arc direction, and the first sliding rod movably extends into the arc-shaped slot; and/or the first guide portion further includes a limiting block provided on the lock body, wherein the limiting block is located on a side of the first transmission member away from the second transmission member; and the limiting block includes a mating curved surface, a middle portion of the mating curved surface protrudes towards the first transmission rod, and a side wall of the first transmission rod is slidably cooperated with the mating curved surface.

Further, the operating member includes: an operating lever, rotatably arranged on the lock body; and a link rod, movably arranged on the lock body along a preset linear direction, wherein the preset linear direction, a rotation axis of the operating lever and an axis direction of the first sliding rod are arranged perpendicular to each other in pairs, the operating lever is in drive connection with the link rod, and the link rod is in drive connection with the first transmission rod and the second transmission rod, respectively.

Further, a first end of the link rod is provided with a drive column, the first transmission rod is provided with a first elongated hole, and the drive column movably passes through the first elongated hole.

Further, a first end of the operating lever is an operating end, a second end of the operating lever is provided with a connecting hole, and a second end of the link rod is provided with a second elongated hole; and the operating member further includes a connecting pin arranged in the connecting hole and the second elongated hole.

Further, a guide structure is provided between the lock body and the link rod, and the guide structure guides a movement direction of the link rod.

Further, the adjustment assembly further includes: a first clamping plate and a second clamping plate, which are both arranged perpendicular to a rotation axis of the operating member, wherein the first clamping plate and the second clamping plate are arranged on the lock body at an interval in a direction of the rotation axis of the operating member; a mating plate, provided on the operating lever, the mating plate extending into a gap between the first clamping plate and the second clamping plate; and a positioning structure, provided between the first clamping plate and the mating plate, and/or provided between the second clamping plate and the mating plate, to limit movement of the mating plate with respect to the first clamping plate and the second clamping plate.

Further, the positioning structure includes: a fastener, the fastener rotatably passing through the first clamping plate, the fastener being threadedly engaged with the second clamping plate; and/or a detent ball, provided on an inner side wall of the first clamping plate and/or the second clamping plate, wherein at least two positioning grooves corresponding to the detent ball are provided on the mating plate, and the at least two positioning grooves are arranged in a rotation direction of the operating lever, and the detent ball selectively extends into one of the at least two positioning grooves to cooperate with the positioning groove.

Further, the first lock base includes: a base body, slidably arranged on the lock body; and a locking member, movably arranged on the base body, the locking member having a locked state in which the locking member is connected with the first transmission member and an unlocked state in which the locking member is separated from the first transmission member.

Further, the base body is provided with a through hole, and the locking member is provided with a lock hole corresponding to the through hole; and the first transmission member further includes a latch pin; when the locking member is in the locked state, the latch pin passes through the through hole and the lock hole, and the latch pin is snap-fitted with the through hole and the lock hole respectively; and when the locking member is in the unlocked state, the latch pin is separated from the through hole and the lock hole respectively.

Further, the lock body includes an upper housing and a lower housing detachably connected, wherein the upper housing and the lower housing enclose an accommodating cavity, and the first transmission rod and the second transmission rod are both arranged in the accommodating cavity; and an inner top wall of the upper housing and an inner bottom wall of the lower housing are each provided with the first guide portion and the second guide portion.

Further, an arc-shaped sliding rail is provided on the lock body, the arc-shaped sliding rail extends along the preset arc direction, and the first lock base is movably arranged on the arc-shaped sliding rail along an extension direction of the arc-shaped sliding rail.

Further, the arc-shaped sliding rail is provided with a sliding groove extending in the extension direction of the arc-shaped sliding rail, the first lock base is provided with a sliding block nested with the sliding groove, and the sliding block movably extends into the sliding groove along an extension direction of the sliding groove.

According to another aspect of the present invention, provided is a display device, including a first display unit, a second display unit and an angle adjustment lock, wherein the angle adjustment lock is the angle adjustment lock provided above, the first lock base of the angle adjustment lock is arranged at a rear side of the first display unit, and the second lock base of the angle adjustment lock is arranged on a rear side of the second display unit.

By applying the technical solutions of the present invention, the angle adjustment lock includes the lock body, the first lock base, the second lock base and the adjustment assembly, by mounting one display unit of two adjacent display units on the first mounting surface and mounting the other display unit of the two adjacent display units on the second mounting surface, when the operating member moves, the operating member drives the first lock base to move along the preset arc direction through the first transmission member; and in the process in which the first lock base moves along the preset arc direction, an included angle exists between a plane where the first mounting surface of the first lock base is located at a first position and a plane where the first mounting surface of the first lock base is located at a second position, and further the angle between the first mounting surface and the second mounting surface when the first lock base is at the first position is different from the angle between the first mounting surface and the second mounting surface when the first lock base is at the second position, so as to adjust the angle between the first mounting surface and the second mounting surface, thereby adjusting the included angle between the two adjacent display units.

### Brief Description of the Drawings

The drawings of the description, constituting a part of the present invention, are used for providing further understanding of the present invention, and the illustrative embodiments of the present invention and illustrations thereof are used for explaining the present invention, rather than constitute inappropriate limitation on the present invention. In the drawings:
Fig. 1 shows an exploded view of an angle adjustment lock provided according to embodiments of the present invention;
Fig. 2 shows an exploded view of a lock body and an adjustment assembly of an angle adjustment lock provided according to embodiments of the present invention;
Fig. 3 shows a schematic structural diagram of a lower housing and an adjustment assembly of an angle adjustment lock provided according to embodiments of the present invention;
Fig. 4 shows a schematic structural diagram of a link rod of an angle adjustment lock provided according to embodiments of the present invention;
Fig. 5 shows a schematic structural diagram of an upper housing of an angle adjustment lock provided according to embodiments of the present invention;
Fig. 6 shows a schematic structural diagram of a mating plate and an operating lever of an angle adjustment lock provided according to embodiments of the present invention;
Fig. 7 shows an exploded view of a latch pin, a first transmission rod, a first sliding rod, and an elastic member of an angle adjustment lock provided according to embodiments of the present invention;
Fig. 8 shows an exploded view of a first lock base of an angle adjustment lock provided according to embodiments of the present invention;
Fig. 9 shows a schematic structural diagram of a first lock base of an angle adjustment lock provided according to embodiments of the present invention;
Fig. 10 shows a schematic structural diagram of a display device in which an included angle between a first display unit and a second display unit is 180° provided according to embodiments of the present invention;
Fig. 11 shows a schematic structural diagram of a display device in which an included angle between a first display unit and a second display unit is 165° provided according to embodiments of the present invention; and
Fig. 12 shows a schematic structural diagram of a display device in which an included angle between a first display unit and a second display unit is 195° provided according to embodiments of the present invention.

The figures above include the following reference signs:
10. Lock body; 11. First guide portion; 111. Arc-shaped slot; 112. Limiting block; 1121. Mating curved surface; 12. Second guide portion; 13. Arc-shaped sliding rail; 14. Upper housing; 15. Lower housing;
20. First lock base; 21. Base body; 211. Through hole; 212. Sliding groove; 213. Cover plate; 2131. Avoidance hole; 22. Locking member; 221. Lock hole; 2211. First circular hole; 2212. Second circular hole; 222. Latching plate; 223. Handle; 23. Reset member;
30. Adjustment assembly; 31. Operating member; 311. Operating lever; 312. Link rod; 3121. Drive column; 3122. First elongated hole; 3123. Second elongated hole; 313. Connecting pin; 32. First transmission member; 321. First sliding rod; 3211. Operation boss; 3212. First circular cylinder; 3213. Second circular cylinder; 3214. First column segment; 3215. Second column segment; 322.

First transmission rod; 323. Latch pin; 3231. Latching groove; 324. Elastic member; 33. Second transmission member; 331. Second sliding rod; 332. Second transmission rod; 34. First clamping plate; 35. Second clamping plate; 36. Mating plate; 361. Positioning groove; 37. Fastener;
40. Second lock base;
50. Guide structure; 60. First display unit; 70. Second display unit.

### Detailed Description of the Embodiments

Hereinafter, the technical solutions in embodiments of the present invention will be described clearly and completely with reference to the accompanying drawings of the embodiments of the present invention. Obviously, the embodiments as described are only some of the embodiments of the present invention, and are not all of the embodiments of the present invention. The following description of at least one exemplary embodiment is merely illustrative in nature and is in no way intended to limit the present invention and any applications or uses thereof. All other embodiments obtained by a person of ordinary skill in the art on the basis of the embodiments of the present invention without involving any inventive effort shall all fall within the scope of protection of the present invention.

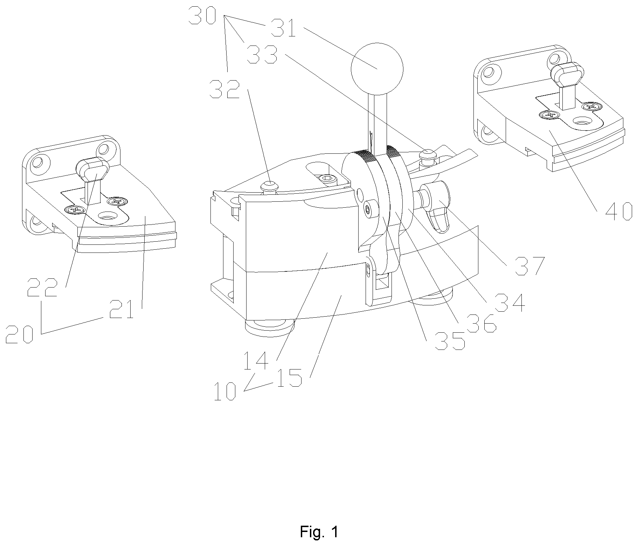

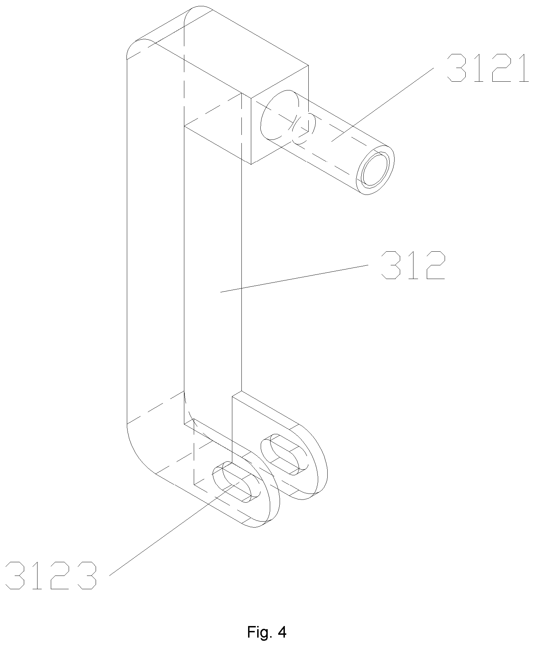

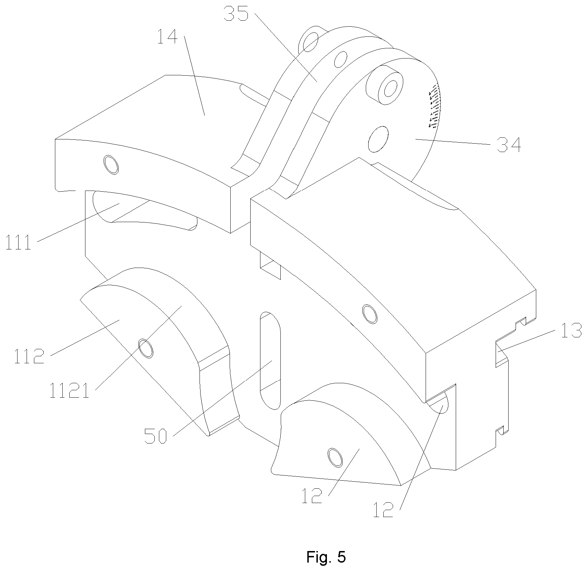

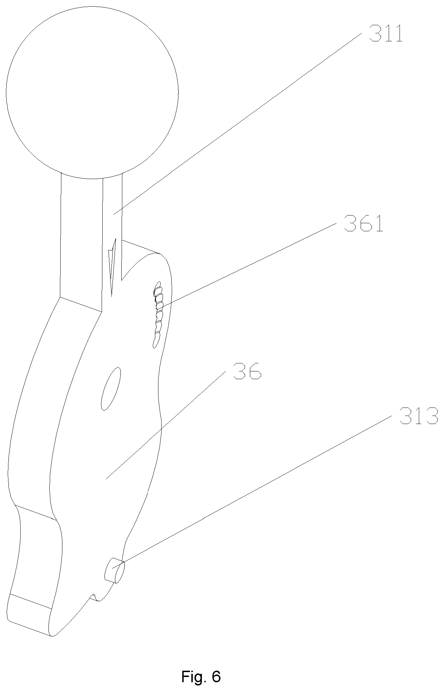

As shown in Fig. 1 to Fig. 9, embodiments of the present invention provide an angle adjustment lock, the angle adjustment lock including a lock body 10, a first lock base 20, a second lock base 40 and an adjustment assembly 30, wherein the lock body 10 is provided with a first guide portion 11, the first lock base 20 is provided with a first mounting surface, the second lock base 40 is arranged on the lock body 10, and the second lock base 40 is provided with a second mounting surface; the adjustment assembly 30 includes an operating member 31 and a first transmission member 32, wherein the operating member 31 is movably arranged on the lock body 10, and the first guide portion 11 is guidingly cooperated with the first transmission member 32; and when the operating member 31 moves, the operating member 31 drives the first lock base 20 to move along a preset arc direction through the first transmission member 32, so as to adjust an angle between the first mounting surface and the second mounting surface.

By applying the angle adjustment lock provided in the present embodiment in which the angle adjustment lock includes the lock body 10, the first lock base 20, the second lock base 40 and the adjustment assembly 30, by mounting one display unit of two adjacent display units on the first mounting surface and mounting the other display unit of the two adjacent display units on the second mounting surface, when the operating member 31 moves, the operating member 31 drives the first lock base 20 to move along the preset arc direction through the first transmission member 32; and in the process in which the first lock base 20 moves along the preset arc direction, an included angle exists between a plane where the first mounting surface of the first lock base 20 is located at a first position and a plane where the first mounting surface of the first lock base 20 is located at a second position, and further the angle between the first mounting surface and the second mounting surface when the first lock base 20 is at the first position is different from the angle between the first mounting surface and the second mounting surface when the first lock base 20 is at the second position, so as to adjust the angle between the first mounting surface and the second mounting surface, thereby adjusting the included angle between the two adjacent display units.

As shown in Fig. 1 to Fig. 3 and Fig. 5, the lock body 10 is further provided with a second guide portion 12, the adjustment assembly 30 further includes a second transmission member 33, and the second guide portion 12 is guidingly cooperated with the second transmission member 33; and when the operating member 31 moves, the operating member 31 drives the second lock base 40 to move along the preset arc direction through the second transmission member 33, such that the first lock base 20 and the second lock base 40 get close to each other or get away from each other along the preset arc direction, so as to adjust the angle between the first mounting surface and the second mounting surface. By mounting the two adjacent display units on the first mounting surface and the second mounting surface, respectively, when the operating member 31 moves, the operating member 31 drives the first lock base 20 to move along the preset arc direction through the first transmission member 32, and the operating member 31 drives the second lock base 40 to move along the preset arc direction through the second transmission member 33, such that the first lock base 20 and the second lock base 40 get close to each other or get away from each other along the preset arc direction, so as to adjust the angle between the first mounting surface and the second mounting surface, thereby adjusting the included angle between the two adjacent display units.

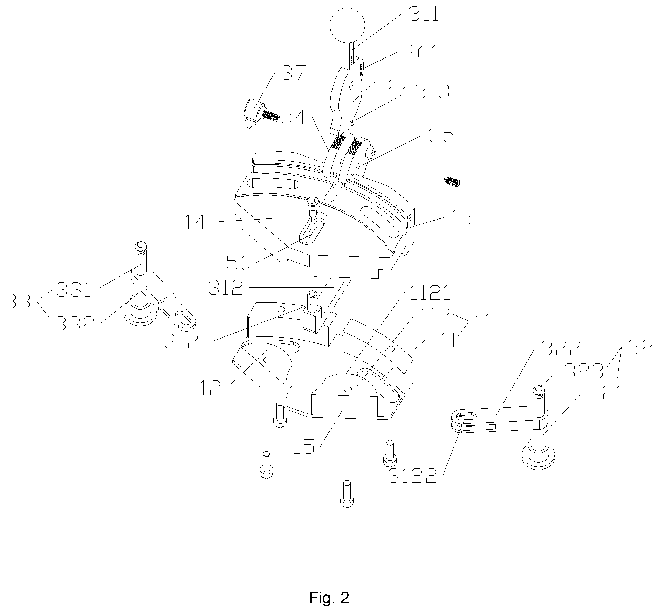

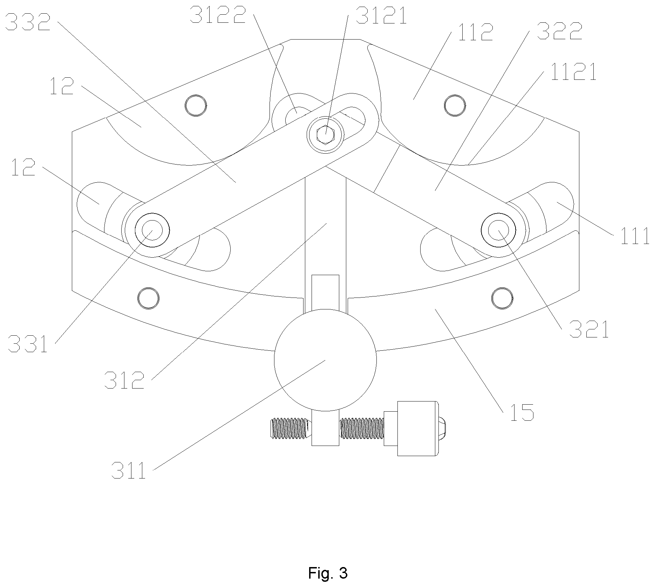

As shown in Fig. 2 and Fig. 3, the first transmission member 32 includes a first sliding rod 321 and a first transmission rod 322, wherein the first sliding rod 321 is connected with the first lock base 20, a first end of the first transmission rod 322 is sleeved on the first sliding rod 321, a second end of the first transmission rod 322 is rotatably connected with the operating member 31, and the first guide portion 11 is guidingly cooperated with the first sliding rod 321. The first guide portion 11 is guidingly cooperated with the first transmission rod 322, such that the first sliding rod 321 is slidably arranged on the lock body 10 along the preset arc direction; and the second transmission member 33 includes a second sliding rod 331 and a second transmission rod 332, wherein the second sliding rod 331 is connected with the second lock base 40, a first end of the second transmission rod 332 is sleeved on the second sliding rod 331, a second end of the second transmission rod 332 is rotatably connected with the operating member 31, and the second guide portion 12 is guidingly cooperated with the second sliding rod 331. The second guide portion 12 is guidingly cooperated with the second transmission rod 332, such that the second sliding rod 331 is slidably arranged on the lock body 10 along the preset arc direction.

When the operating member 31 moves, the operating member 31 drives the first sliding rod 321 to move along the preset arc direction through the first transmission rod 322, and the operating member 31 drives the second sliding rod 331 to move along the preset arc direction through the second transmission rod 332, such that the first lock base 20 and the second lock base 40 get close to each other or get away from each other along the preset arc direction, so as to adjust the angle between the first mounting surface and the second mounting surface.

As shown in Fig. 2, Fig. 3 and Fig. 5, the first guide portion 11 includes an arc-shaped slot 111 provided on the lock body 10, wherein a center line of the arc-shaped slot 111 extends along the preset arc direction, and the first sliding rod 321 movably extends into the arc-shaped slot 111. When the operating member 31 drives the first sliding rod 321 to move through the first transmission rod 322, the arc-shaped slot 111 is used to achieve a guide effect on a movement path of the first sliding rod 321.

As shown in Fig. 2, Fig. 3 and Fig. 5, the first guide portion 11 further includes a limiting block 112 provided on the lock body 10, wherein the limiting block 112 is located on a side of the first transmission member 32 away from the second transmission member 33, and the limiting block 112 includes a mating curved surface 1121, a middle portion of the mating curved surface 1121 protrudes towards the first transmission rod 322, and a side wall of the first transmission rod 322 is slidably cooperated with the mating curved surface 1121. When the operating member 31 drives the first sliding rod 321 to move through the first transmission rod 322, the side wall of the first transmission rod 322 is used to slidably cooperate with the mating curved surface 1121, so as to achieve a guide effect on the movement path of the first end of the first transmission rod 322, thereby achieving a guide function on the movement path of the first sliding rod 321.

As shown in Fig. 2 and Fig. 3, the operating member 31 includes an operating lever 311 and a link rod 312, wherein the operating lever 311 is rotatably arranged on the lock body 10, and the link rod 312 is movably provided on the lock body 10 along a preset linear direction; the preset linear direction, a rotation axis of the operating lever 311 and an axis direction of the first sliding rod 321 are arranged perpendicular to each other in pairs, the operating lever 311 is in drive connection with the link rod 312, and the link rod 312 is in drive connection with the first transmission rod 322 and the second transmission rod 332, respectively. By using the operating member 31 having the described structure, by swinging the operating lever 311, the operating lever 311 drives the link rod 312 to move along the preset linear direction, and thus the link rod 312 drives the first transmission rod 322 and the second transmission rod 332, so as to drive the first sliding rod 321 and the second sliding rod 331 to move along a second preset arc-shaped direction. While adjusting the angle between the first mounting surface and the second mounting surface by using the operating member 31, the operation resistance can be reduced, such that the adjustment operation is convenient, quick, and labor-saving.

It should be noted that, the preset linear direction, the rotation axis of the operating lever 311 and the axis direction of the first sliding rod 321 being arranged perpendicular to each other in pairs means that the preset linear direction is perpendicular to the rotation axis of the operating lever 311, the rotation axis of the operating lever 311 is perpendicular to the axis direction of the first sliding rod 321, and the preset linear direction is perpendicular to the axis direction of the first sliding rod 321.

As shown in Fig. 2 to Fig. 4, a first end of the link rod 312 is provided with a drive column 3121, the first transmission rod 322 is provided with a first elongated hole 3122, and the drive column 3121 movably passes through the first elongated hole 3122. By using the described structure, the smoothness of the link rod 312 driving the first transmission rod 322 to move can be improved, and by using the movement of the drive column 3121 in the first elongated hole 3122, the first end of the link rod 312 and the first transmission rod 322 are prevented from being stuck.

As shown in Fig. 2 to Fig. 4, a first end of the operating lever 311 is an operating end, a second end of the operating lever 311 is provided with a connecting hole, a second end of the link rod 312 is provided with a second elongated hole 3123, and the operating member 31 further includes a connecting pin 313 arranged in the connecting hole and the second elongated hole 3123. By using the described structure, by swinging the operating end, the second end of the operating lever 311 drives the link rod 312 to move along the preset linear direction, which can improve the smoothness of the operating lever 311 driving the link rod 312 to move; and by using the movement of the connecting pin 313 in the second elongated hole 3123, the second end of the operating lever 311 and the second end of the link rod 312 are prevented from being stuck.

As shown in Fig. 2 to Fig. 5, a guide structure 50 is provided between the lock body 10 and the link rod 312, and the guide structure 50 guides a movement direction of the link rod 312. Specifically, the guide structure 50 includes a guide hole provided on the lock body 10, the guide hole extends along the preset linear direction, and the drive column 3121 movably passes through the guide hole.

As shown in Fig. 2 to Fig. 5, the adjustment assembly 30 further includes a first clamping plate 34, a second clamping plate 35, a mating plate 36 and a positioning structure; the first clamping plate 34 and the second clamping plate 35 are both arranged perpendicular to a rotation axis of the operating member 31, and the first clamping plate 34 and the second clamping plate 35 are arranged on the lock body 10 at an interval in a direction of the rotation axis of the operating member 31; and the mating plate 36 is provided on the operating lever 311, the mating plate 36 extends into a gap between the first clamping plate 34 and the second clamping plate 35, and the positioning structure is arranged between the first clamping plate 34 and the mating plate 36. The positioning structure is arranged between the second clamping plate 35 and the mating plate 36, to limit movement of the mating plate 36 relative to the first clamping plate 34 and the second clamping plate 35. After the included angle between the first mounting surface and the second mounting surface is adjusted in place, the positioning structure is used to limit the swinging of the mating plate 36 and the operating lever 311.

As shown in Fig. 1 and Fig. 2, the positioning structure includes a fastener 37, wherein the fastener 37 rotatably passes through the first clamping plate 34, and the fastener 37 is threadedly engaged with the second clamping plate 35. When the included angle between the first mounting surface and the second mounting surface is adjusted, the fastener 37 is unscrewed, and the operating lever 311 is swung to drive the mating plate 36 to swing. After the included angle between the first mounting surface and the second mounting surface is adjusted in place, the fastener 37 is locked, such that the first clamping plate 34 and the second clamping plate 35 clamp the mating plate 36 and limit the swinging of the mating plate 36 and the operating lever 311.

Specifically, in the present embodiment, the included angle between the first mounting surface and the second mounting surface can be arbitrarily adjusted within a range from an inner arc 165 degrees to an outer arc 165 degrees.

As shown in Fig. 2, the positioning structure further includes a detent ball, wherein the detent ball is provided on an inner side wall of the first clamping plate 34 and/or the second clamping plate 35, and at least two positioning grooves 361 corresponding to the detent ball are provided on the mating plate 36; the at least two positioning grooves 361 are arranged in a rotation direction of the operating lever 311, and the detent ball selectively extends into one of the at least two positioning grooves 361 to cooperate with the positioning groove 361. When the included angle between the first mounting surface and the second mounting surface is adjusted, the operating lever 311 is swung to drive the mating plate 36 to swing, the detent ball moves between the at least two positioning grooves 361; and when the detent ball extends into one of the at least two positioning grooves 361 and is cooperated with the positioning groove 361, the detent ball and the positioning groove 361 are used to provide precise positioning.

Specifically, in the present embodiment, the variation of the included angle between the first mounting surface and the second mounting surface which corresponds to two adjacent positioning grooves 361 is 5°.

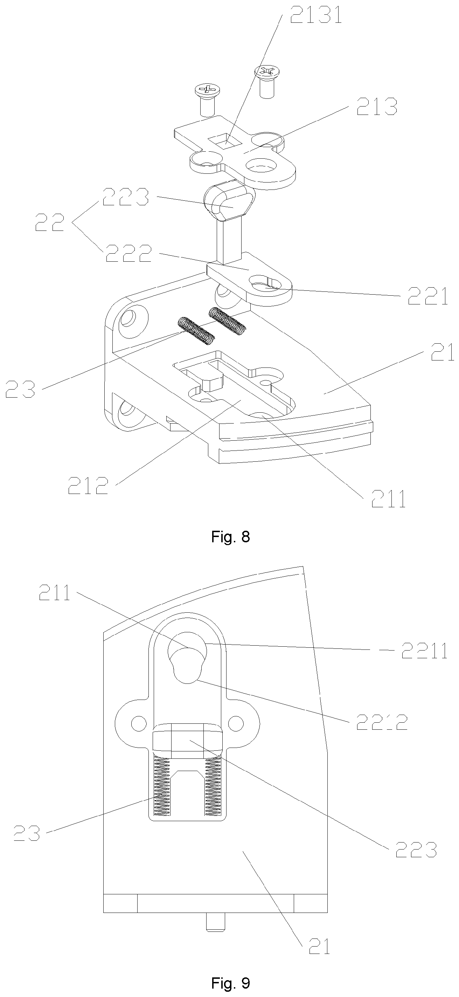

As shown in Fig. 8 and Fig. 9, the first lock base 20 includes a base body 21 and a locking member 22, wherein the base body 21 is slidably arranged on the lock body 10, the locking member 22 is movably arranged on the base body 21, and the locking member 22 has a locked state in which the locking member is connected with the first transmission member 32 and an unlocked state in which the locking member is separated from the first transmission member 32.

As shown in Fig. 8 and Fig. 9, the base body 21 is provided with a through hole 211, and the locking member 22 is provided with a lock hole 221 corresponding to the through hole 211; and the first transmission member 32 further includes a latch pin 323. When the locking member 22 is in the locked state, the latch pin 323 passes through the through hole 211 and the lock hole 221, and the latch pin 323 is snap-fitted with the through hole 211 and the lock hole 221 respectively; and when the locking member 22 is in the unlocked state, the latch pin 323 is separated from the through hole 211 and the lock hole 221 respectively.

The base body 21 is mounted on a display box body, and when the display box body is to be detached, only the locking member 22 needs to be pulled to switch the locking member 22 to the unlocked state, and then the latch pin 323 and the base body 21 can be separated; and when mounting the display box body, only the locking member 22 needs to be pulled, the locking member 22 is switched to the unlocked state, and the base body 21 is placed on the lock body 10, such that the latch pin 323 passes through the through hole 211 and the lock hole 221, then the locking member 22 is pulled, and the locking member 22 is switched to the locked state, such that the locking member 22 and the latch pin 323 are connected, and the lock body 10 and the base body 21 are connected, thereby simplifying the assembly and disassembly operations of the lock body 10 and the display box body.

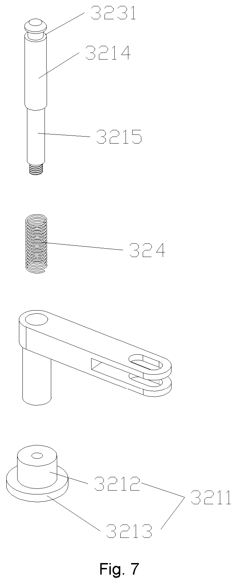

As shown in Fig. 7, the latch pin 323 and the first sliding rod 321 are coaxially arranged at an upper end of the first sliding rod 321, the latch pin 323 is movable relative to the first sliding rod 321 along an axial direction thereof, and the latch pin 323 has an upwardly-extending snap-fit position and a downwardly-retracting avoidance position. When the latch pin 323 is in the snap-fit position, the latch pin 323 passes through the base body 21; and when the latch pin 323 is in the avoidance position, the latch pin 323 is disengaged from the base body 21 and avoids the base body 21. When mounting the display box body, the base body 21 is mounted on the display box body, and the latch pin 323 moves to the avoidance position, such that the base body 21 can slide to the lock body 10 along the preset arc direction; and when the through hole 211 is aligned with the latch pin 323, the locking member 22 is switched to the unlocked state, and the latch pin 323 is moved to the snap-fit position, such that the latch pin 323 passes through the base body 21, and then the locking member 22 is switched to the locked state, so as to connect the locking member 22 and the latch pin 323, and connect the lock body 10 and the base body 21, thereby simplifying the assembly and disassembly operations of the lock body 10 and the display box body.

Furthermore, when the display box body is to be detached, the locking member 22 is switched to the unlocked state, and then the latch pin 323 moves to the avoidance position, such that the base body 21 can be separated from the lock body 10 along the preset arc direction.

As shown in Fig. 7, the first transmission member 32 further includes an elastic member 324, wherein the elastic member 324 is arranged between the latch pin 323 and the first sliding rod 321 to apply an elastic force for the latch pin 323 to reset to the snap-fit position. When the latch pin 323 needs to be moved to the avoidance position, the latch pin 323 is pulled downwards; and when the latch pin 323 needs to be moved to the snap-fit position, only needs to release the latch pin 323, and then the latch pin 323 is reset to the snap-fit position under the action of the elastic force of the elastic member 324.

As shown in Fig. 7, when the locking member 22 is in the locked state and the latch pin 323 is in the snap-fit position, the locking member 22 is snap-fitted with a first end of the latch pin 323, and a second end of the latch pin 323 is provided with an operation boss 3211; and when the latch pin 323 is in the snap-fit position, the operation boss 3211 abuts against the lock body 10 in a first direction; and when the latch pin 323 is in the avoidance position, the operation boss 3211 is spaced apart from the lock body 10 in the first direction (the up-down direction in Fig. 7). By using the operation boss 3211, when the latch pin 323 moves to the avoidance position, only needs to pull the operation boss 3211 downward, allowing for convenient operations; and when the latch pin 323 is reset to the snap-fit position, the operation boss 3211 abuts against the lock body 10 in the first direction, so as to prevent the latch pin 323 from being disengaged from the lock body 10 upwards, and enable the operation boss 3211 to be exposed outside the lock body 10, thereby facilitating next pulling of the operation boss 3211.

As shown in Fig. 7, the latch pin 323 includes a first column segment 3214 and a second column segment 3215 connected in sequence, wherein the diameter of the first column segment 3214 is greater than the diameter of the second column segment 3215, the operation boss 3211 is arranged at the end of the second column segment 3215 facing away from the first column segment 3214; and the elastic member 324 is sleeved on the second column segment 3215, and two ends of the elastic member 324 are abutted against the first column segment 3214 and the first sliding rod 321, respectively. By using the latch pin 323 having the described structure, it is convenient to mount the elastic member 324 between the latch pin 323 and the first sliding rod 321. Specifically, the operation boss 3211 is a nut member, and the end of the second column segment 3215 facing away from the first column segment 3214 is threadedly engaged with the nut member; and the elastic member 324 is sleeved on the second column segment 3215, and the second column segment 3215 passes through the first sliding rod 321, such that two ends of the elastic member 324 are abutted against the first column segment 3214 and the first sliding rod 321, respectively, and then the nut member is connected to the end of the second column segment 3215 facing away from the first column segment 3214.

As shown in Fig. 7, the operation boss 3211 includes a first circular cylinder 3212 and a second circular cylinder 3213 which are coaxially provided with the first sliding rod 321, wherein the first circular cylinder 3212 is provided at a second end of the first sliding rod 321, and the second circular cylinder 3213 is provided at the end of the first circular cylinder 3212 facing away from the first sliding rod 321; and the diameter of the first circular cylinder 3212 is greater than the diameter of the first sliding rod 321, and the diameter of the second circular cylinder 3213 is greater than the diameter of the first circular cylinder 3212. When the latch pin 323 is in the snap-fit position, the first circular cylinder 3212 abuts against the lock body 10 in the first direction; and when the latch pin 323 is in the avoidance position, the first circular cylinder 3212 is spaced apart from the lock body 10 in the first direction. When the latch pin 323 is in the snap-fit position, the first circular cylinder 3212 abuts against the lock body 10 in the first direction, and the second circular cylinder 3213 is spaced apart from the lock body 10 in the first direction, thereby facilitating a user to pull the second circular cylinder 3213.

As shown in Fig. 2, an arc-shaped sliding rail 13 is provided on the lock body 10, the arc-shaped sliding rail 13 extends along the preset arc direction, and the first lock base 20 is movably arranged on the arc-shaped sliding rail 13 along an extension direction of the arc-shaped sliding rail 13. The arc-shaped sliding rail 13 is used to guide the first lock base 20.

In the present embodiment, the second lock base 40 is movably arranged on the arc-shaped sliding rail 13 along the extension direction of the arc-shaped sliding rail 13.

Specifically, the first lock base 20 slides into the lock body 10 along the arc-shaped sliding rail 13, the latch pin is pulled to avoid the first lock base 20, and the locking member 22 is switched to the unlocked state; when the latch pin is aligned with the through hole 211 and the lock hole 221, the latch pin is released such that the latch pin is inserted into the through hole 211 and the lock hole 221, and then the locking member 22 is switched to the locked state, such that the latch pin is snap-fitted with the through hole 211 and the lock hole 221, respectively.

In the present embodiment, the arc-shaped sliding rail 13 is provided with a sliding groove extending in the extension direction of the arc-shaped sliding rail, the first lock base 20 is provided with a sliding block nested with the sliding groove, and the sliding block movably extends into the sliding groove along an extension direction of the sliding groove. The sliding block is in limited fit with the arc-shaped sliding rail 13 in a depth direction of the sliding groove, thereby preventing the sliding block from being disengaged from the sliding groove in the process of the first lock base 20 sliding along the arc-shaped sliding rail 13.

As shown in Fig. 1 and Fig. 2, the lock body 10 includes an upper housing 14 and a lower housing 15 detachably connected, wherein the upper housing 14 and the lower housing 15 enclose an accommodating cavity, the first transmission rod 322 and the second transmission rod 332 are both arranged in the accommodating cavity, and an inner top wall of the upper housing 14 and an inner bottom wall of the lower housing 15 are each provided with the first guide portion 11 and the second guide portion 12. The lock body 10 using the described structure facilitates assembling and repairing of the angle adjustment lock, and the lock body 10 is used to shield the first transmission rod 322, the second transmission rod 332, the first guide portion 11 and the second guide portion 12, thereby prolonging the service life.

In the present embodiment, the first transmission member 32 and the second transmission member 33 have similar structures (as shown in Fig. 2, the only difference between the two lies in that: the end of the first transmission rod 322 remote from the first sliding rod 321 is provided with an insertion groove extending in the extending direction of the first transmission rod 322, while the end of the second transmission rod 332 remote from the second sliding rod 331 is provided with an insertion plate extending in the extending direction of the second transmission rod 332, the insertion plate is inserted into the insertion groove), and the first lock base 20 and the second lock base 40 have the same structure, and thus, the first transmission member 32 and the second transmission member 33 can be processed by using the same process steps and apparatuses, and the first lock base 20 and the second lock base 40 can be processed by using the same process steps and apparatuses, thereby reducing costs.

In the present embodiment, the side surface of the first lock base 20 facing the second lock base 40 and the side surface of the second lock base 40 facing the first lock base 20 are each provided with an avoidance slope, such that the structure is compact.

Specifically, assembling steps of the lock body 10 are as follows: the first transmission member 32 and the second transmission member 33 are stacked together, the drive column 3121 passes through the first elongated hole 3122 and the second transmission member 33 (specifically, an elongated hole arranged on the second transmission member 33 and having the same structure as the first elongated hole 3122); the connecting pin 313 passes through the connecting hole and the second elongated hole 3123, the operating lever 311 is pin-connected to the upper housing 14, and the drive column 3121 passes through the guide hole and is locked by a screw, so as to prevent the drive column 3121 from being disengaged from the guide hole; and then the upper housing 14 and the lower housing 15 are connected together (note that the first sliding rod 321 is inserted into the arc-shaped slot 111), the detent ball and the fastener 37 are mounted, and the assembling of the lock body is completed.

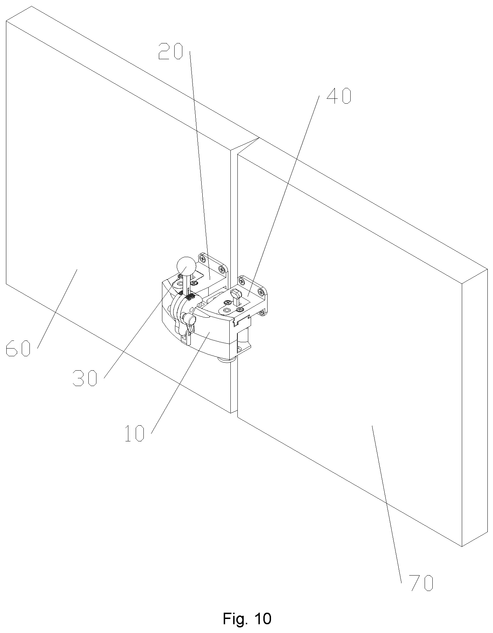

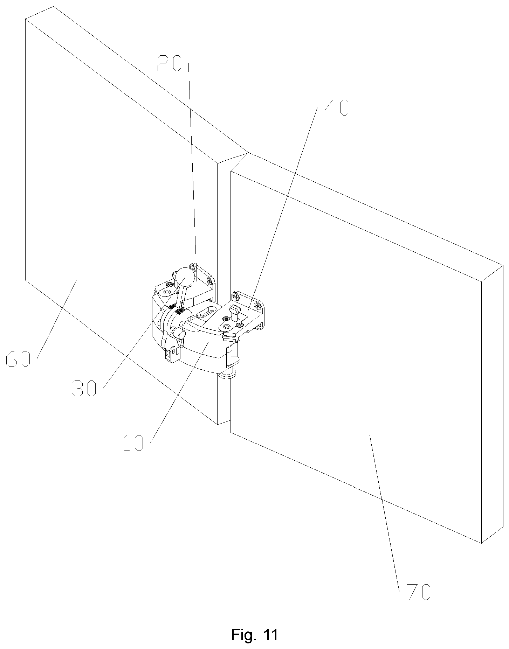

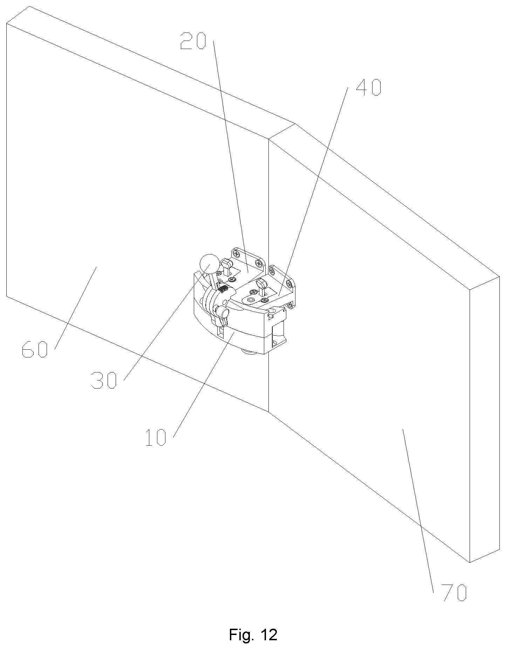

As shown in Fig. 10 to Fig. 12, through the cooperation of the operating lever 311, the link rod 312, the first transmission member 32 and the second transmission member 33, when the operating lever 311 swings forward, the first lock base 20 and the second lock base 40 swing forward accordingly, thus driving the first display unit 60 and the second display unit 70 to swing forward, e.g., when the operating lever 311 swings from the state shown in Fig. 10 to the state shown in Fig. 11, the included angle between the first display unit 60 and the second display unit 70 changes from 180° to less than 180°; and when the operating lever 311 swings backward, the first lock base 20 and the second lock base 40 swing backward accordingly, thus driving the first display unit 60 and the second display unit 70 to swing backward, e.g., when the operating lever 311 swings from the state shown in Fig. 10 to the state shown in Fig. 12, the included angle between the first display unit 60 and the second display unit 70 changes from 180° to greater than 180°.

As shown in Fig. 8 and Fig. 9, the first lock base 20 further includes a reset member 23, wherein the reset member 23 is arranged between the base body 21 and the locking member 22, so as to apply a reset force to the locking member 22 for moving to the locked state. After the locking member 22 is switched to the unlocked state, only needs to release the locking member 22, and then the locking member 22 can be reset to the locked state under the action of the reset force of the reset member 23.

As shown in Fig. 8, the base body 21 is provided with a sliding groove 212, the locking member 22 is movably arranged in the sliding groove 212 along a length direction of the sliding groove 212; the length direction of the sliding groove 212 intersects with the preset arc direction, the reset member 23 is arranged in the sliding groove 212, and two ends of the reset member 23 abut against the base body 21 and the locking member 22, respectively. By providing the locking member 22 and the reset member 23 in the sliding groove 212, the movement of the locking member 22 can be guided.

As shown in Fig. 8 and Fig. 9, the locking member 22 includes a latching plate 222 and a handle 223, wherein the latching plate 222 is movably provided in the sliding groove 212 along the length direction of the sliding groove 212; when the locking member 22 is in the locked state, the latching plate 222 is snap-fitted with the latch pin 323; and when the locking member 22 is in the unlocked state, the latching plate 222 is separated from the latch pin 323, and the handle 223 is provided on the latching plate 222 and extends in the direction of the latching plate 222 facing away from the base body 21. By using the locking member 22 having the described structure, by operating the handle 223, the latching plate 222 is driven to move, such that the locking member 22 is switched between the locked state and the unlocked state, so as to facilitate the operation of the locking member 22.

As shown in Fig. 8, the base body 21 further includes a cover plate 213, wherein the cover plate 213 covers an opening of the sliding groove 212 and is connected to the base body 21, the cover plate 213 is provided with a avoidance hole 2131, the avoidance hole 2131 extends in the same direction as the sliding groove 212, and the handle 223 movably passes through the avoidance hole 2131 along the extension direction of the avoidance hole 2131. By using the cover plate 213 to shield the sliding groove 212 and the locking member 22 and the reset member 23 located in the sliding groove 212, the service life of the first lock base 20 is prolonged.

As shown in Fig. 7 to Fig. 9, a side wall of the first end of the latch pin 323 is provided with a latching groove 3231, and the lock hole 221 includes a first circular hole 2211 and a second circular hole 2212 in communication with each other; a connecting line between the circle center of the first circular hole 2211 and the circle center of the second circular hole 2212 is parallel to a movement direction of the locking member 22, and the radius of the first circular hole 2211 is greater than the radius of the second circular hole 2212. The base body 21 is provided with the through hole 211. When the locking member 22 is in the locked state, the through hole 211 is aligned with the second circular hole 2212, the latch pin 323 passes through the through hole 211 and the second circular hole 2212, and the latching groove 3231 is snap-fitted with the second circular hole 2212; and when the locking member 22 is in the unlocked state, the through hole 211 is aligned with the first circular hole 2211, and the latch pin 323 movably passes through the through hole 211 and the first circular hole 2211 along the first direction.

As shown in Fig. 1 to Fig. 12, some other embodiments of the present invention provide a display device, the display device including a first display unit 60, a second display unit 70 and an angle adjustment lock; wherein the angle adjustment lock is the angle adjustment lock provided above, the first lock base 20 of the angle adjustment lock is arranged at a rear side of the first display unit 60, and the second lock base 40 of the angle adjustment lock is arranged at a rear side of the second display unit 70. By applying the display device provided in the present embodiment, when the operating member 31 moves, the operating member 31 drives the first lock base 20 to move along the preset arc direction through the first transmission member 32, and the operating member 31 drives the second lock base 40 to move along the preset arc direction through the second transmission member 33, such that the first lock base 20 and the second lock base 40 get close to each other or get away from each other along the preset arc direction, so as to adjust the angle between the first mounting surface and the second mounting surface, thereby adjusting the included angle between the first display unit 60 and the second display unit 70.

Specifically, the circle center of the preset arc direction and the circle center of the second preset arc-shaped direction are both located on an intersection line between a front side edge of the first display unit 60 and a front side edge of the second display unit 70.

In addition, it should be noted that terms such as "first" and "second", etc. are used to define parts, only for the convenience of distinguishing corresponding parts, and if no other statement is made, the terms do not have special meanings, and therefore cannot be construed as limiting the scope of protection of the present invention.

The content above merely relates to preferred embodiments of the present invention, and is not intended to limit the present invention. For a person skilled in the art, the present invention may have various modifications and changes. Any modifications, equivalent replacements, improvements and the like made within the spirit and principle of the present invention shall all fall within the scope of protection of the present invention.

## Claims

1. An angle adjustment lock, wherein the angle adjustment lock comprises:
a lock body (10), the lock body (10) being provided with a first guide portion (11);
a first lock base (20), the first lock base (20) being provided with a first mounting surface;
a second lock base (40), the second lock base (40) being provided with a second mounting surface; and
an adjustment assembly (30), comprising an operating member (31) and a first transmission member (32), wherein the operating member (31) is movably arranged on the lock body (10), and the first guide portion (11) is guidingly cooperated with the first transmission member (32); and when the operating member (31) moves, the operating member (31) drives the first lock base (20) to move along a preset arc direction through the first transmission member (32), so as to adjust an angle between the first mounting surface and the second mounting surface.

2. The angle adjustment lock according to claim 1, wherein
the first transmission member (32) comprises a first sliding rod (321) and a first transmission rod (322), wherein the first sliding rod (321) is connected with the first lock base (20), a first end of the first transmission rod (322) is sleeved on the first sliding rod (321), a second end of the first transmission rod (322) is rotatably connected with the operating member (31), and the first guide portion (11) is guidingly cooperated with the first sliding rod (321); and/ or the first guide portion (11) is guidingly cooperated with the first transmission rod (322), such that the first sliding rod (321) is slidably arranged on the lock body (10) along the preset arc direction;
wherein when the operating member (31) moves, the operating member (31) drives the first sliding rod (321) to move along the preset arc direction through the first transmission rod (322).

3. The angle adjustment lock according to claim 2, wherein the lock body (10) is further provided with a second guide portion (12), the adjustment assembly (30) further comprises a second transmission member (33), and the second guide portion (12) is guidingly cooperated with the second transmission member (33); and when the operating member (31) moves, the operating member (31) drives the second lock base (40) to move along the preset arc direction through the second transmission member (33), such that the first lock base (20) and the second lock base (40) get close to each other or get away from each other along the preset arc direction, so as to adjust the angle between the first mounting surface and the second mounting surface, and the second transmission member (33) comprises a second sliding rod (331) and a second transmission rod (332), wherein the second sliding rod (331) is connected with the second lock base (40), a first end of the second transmission rod (332) is sleeved on the second sliding rod (331), a second end of the second transmission rod (332) is rotatably connected with the operating member (31), and the second guide portion (12) is guidingly cooperated with the second sliding rod (331), and/ or the second guide portion (12) is guidingly cooperated with the second transmission rod (332), such that the second sliding rod (331) is slidably arranged on the lock body (10) along the preset arc direction; wherein when the operating member (31) moves, the operating member (31) drives the second sliding rod (331) to move along the preset arc direction through the second transmission rod (332).

4. The angle adjustment lock according to claim 3, wherein
the first guide portion (11) comprises an arc-shaped slot (111) provided on the lock body (10), wherein the arc-shaped slot (111) extends along the preset arc direction, and the first sliding rod (321) movably extends into the arc-shaped slot (111); and/or
the first guide portion (11) further comprises a limiting block (112) provided on the lock body (10),wherein the limiting block (112) is located on a side of the first transmission member (32) away from the second transmission member (33); and the limiting block (112) comprises a mating curved surface (1121), a middle portion of the mating curved surface (1121) protrudes towards the first transmission rod (322), and a side wall of the first transmission rod (322) is slidably cooperated with the mating curved surface (1121).

5. The angle adjustment lock according to claim 3, wherein the operating member (31) comprises:
an operating lever (311), rotatably arranged on the lock body (10); and
a link rod (312), movably arranged on the lock body (10) along a preset linear direction, wherein the preset linear direction, a rotation axis of the operating lever (311) and an axis direction of the first sliding rod (321) are arranged perpendicular to each other in pairs, the operating lever (311) is in drive connection with the link rod (312), and the link rod (312) is in drive connection with the first transmission rod (322) and the second transmission rod (332), respectively.

6. The angle adjustment lock according to claim 5, wherein a first end of the link rod (312) is provided with a drive column (3121), the first transmission rod (322) is provided with a first elongated hole (3122), and the drive column (3121) movably passes through the first elongated hole (3122).

7. The angle adjustment lock according to claim 6, wherein a first end of the operating lever (311) is an operating end, a second end of the operating lever (311) is provided with a connecting hole, and a second end of the link rod (312) is provided with a second elongated hole (3123); and the operating member (31) further comprises a connecting pin (313) arranged in the connecting hole and the second elongated hole (3123).

8. The angle adjustment lock according to any one of claims 5-7, wherein a guide structure (50) is provided between the lock body (10) and the link rod (312), and the guide structure (50) guides a movement direction of the link rod (312).

9. The angle adjustment lock according to any one of claims 5-7, wherein the adjustment assembly (30) further comprises:
a first clamping plate (34) and a second clamping plate (35), which are both arranged perpendicular to a rotation axis of the operating member (31), wherein the first clamping plate (34) and the second clamping plate (35) are arranged on the lock body (10) at an interval in a direction of the rotation axis of the operating member (31);
a mating plate (36), provided on the operating lever (311), the mating plate (36) extending into a gap between the first clamping plate (34) and the second clamping plate (35); and
a positioning structure, provided between the first clamping plate (34) and the mating plate (36), and/or provided between the second clamping plate (35) and the mating plate (36), to limit movement of the mating plate (36) with respect to the first clamping plate (34) and the second clamping plate (35).

10. The angle adjustment lock according to claim 9, wherein the positioning structure comprises:
a fastener (37), the fastener (37) rotatably passing through the first clamping plate (34), the fastener (37) being threadedly engaged with the second clamping plate (35); and/or
a detent ball, provided on an inner side wall of the first clamping plate (34) and/or the second clamping plate (35), wherein at least two positioning grooves (361) corresponding to the detent ball are provided on the mating plate (36), and the at least two positioning grooves (361) are arranged in a rotation direction of the operating lever (311), and the detent ball selectively extends into one of the at least two positioning grooves (361) to cooperate with the positioning groove (361).

11. The angle adjustment lock according to any one of claim 1-10, wherein the first lock base (20) comprises:
a base body (21), slidably arranged on the lock body (10); and
a locking member (22), movably arranged on the base body (21), the locking member (22) having a locked state in which the locking member is connected with the first transmission member (32) and an unlocked state in which the locking member is separated from the first transmission member (32).

12. The angle adjustment lock according to claim 11, wherein the base body (21) is provided with a through hole (211), and the locking member (22) is provided with a lock hole (221) corresponding to the through hole (211); and the first transmission member (32) further comprises a latch pin; when the locking member (22) is in the locked state, the latch pin passes through the through hole (211) and the lock hole (221), and the latch pin is snap-fitted with the through hole (211) and the lock hole (221) respectively; and when the locking member (22) is in the unlocked state, the latch pin is separated from the through hole (211) and the lock hole (221) respectively.

13. The angle adjustment lock according to any one of claims 3-10, wherein the lock body (10) comprises an upper housing (14) and a lower housing (15) detachably connected,
wherein the upper housing (14) and the lower housing (15) enclose an accommodating cavity, and the first transmission rod (322) and the second transmission rod (332) are both arranged in the accommodating cavity; and
an inner top wall of the upper housing (14) and an inner bottom wall of the lower housing (15) are each provided with the first guide portion (11) and the second guide portion (12).

14. The angle adjustment lock according to any one of claims 1-13, wherein an arc-shaped sliding rail (13) is provided on the lock body (10), the arc-shaped sliding rail (13) extends along the preset arc direction, and the first lock base (20) is movably arranged on the arc-shaped sliding rail (13) along an extension direction of the arc-shaped sliding rail (13).

15. A display device, comprising a first display unit (60), a second display unit (70) and an angle adjustment lock, wherein the angle adjustment lock is the angle adjustment lock according to any one of claims 1-14, the first lock base (20) of the angle adjustment lock is arranged at a rear side of the first display unit (60), and the second lock base (40) of the angle adjustment lock is arranged on a rear side of the second display unit (70).
